Europäisches Patentamt

European Patent Office

Office européen des brevets

(11) Publication number: **0 277 843 B1**

## EUROPEAN PATENT SPECIFICATION

(45) Date of publication of patent specification: **25.11.92**    (51) Int. Cl.⁵: **B01D 53/36**, B01J 20/18

(21) Application number: **88301002.7**

(22) Date of filing: **05.02.88**

(54) **Ozone adsorbing and decomposing agent and method of using same.**

(30) Priority: **05.02.87 JP 23506/87**
**07.07.87 JP 167822/87**

(43) Date of publication of application:
**10.08.88 Bulletin  88/32**

(45) Publication of the grant of the patent:
**25.11.92 Bulletin  92/48**

(84) Designated Contracting States:
**DE FR GB**

(56) References cited:
EP-A- 0 014 059
US-A- 4 101 296
US-A- 4 259 299

(73) Proprietor: **Union Showa K.K.**
**1-27-17, Hamamatsu-cho**
**Minato-Ku Tokyo(JP)**

(72) Inventor: **Oigo, Ei**
**634-2-254, Nova-cho Konan-ku**
**Yokohama-shi Kanagawa(JP)**
Inventor: **Maehara, Mitsuo**
**3-8-2-504, Nagatakita Minami-ku**
**Yokohama-shi Kanagawa(JP)**

(74) Representative: **Adams, William Gordon et al**
**RAWORTH, MOSS & COOK 36 Sydenham**
**Road**
**Croydon Surrey CR0 2EF(GB)**

Rank Xerox (UK) Business Services

**Description**

BACKGROUND OF THE INVENTION

1. Field of the Invention

The present invention relates to an ozone adsorbing and decomposing agent, more particularly to an ozone adsorbing and decomposing agent which can be suitably used for removing ozone from, for example, ozone-containing air discharged from a wastewater treatment process using ozone, and to a method of using same.

2. Description of the Related Art

In the prior art, as methods for removing ozone contained in a gas such as air, there are known: (1) a method of decomposing ozone with light or heat; (2) a method of using a chemical solution such as a reducing solution or alkali solution of sodium sulfite, and potassium iodide; and (3) a method of decomposing ozone by using a decomposing catalyst such as activated charcoal, a mixture of activated charcoal and silica gel, and a general purpose zeolite of the prior art, or a metal oxide. Among these methods, method (3) is most widely used, but activated charcoal causes a problem in that it is consumed through the reaction of carbon and ozone and causes the formation of carbon monooxide or carbon dioxide. Also, although the general purpose zeolite has a high ozone decomposing ability when active, the zeolite is highly hydrophilic but the activity thereof is remarkably lowered by moisture adsorption, and thus a problem arises in that it can not be used in a system with a high moisture content. Further, an amorphous inorganic oxide such as silica gel is also hydrophilic, but has a problem of a low activity. Also, most metal oxide catalysts have a problem in that they are deactivated by, for example, water or carbon dioxide.

SUMMARY OF THE INVENTION

Accordingly, the objects of the present invention are to eliminate the above-mentioned disadvantages of the prior art and to develop an ozone adsorbing and decomposing agent which can effectively remove ozone from a gas with a relatively high water content by solving the problems in the methods of removing ozone in a gas of the prior art as described above, namely the reaction of activated charcoal with ozone, and inability to effectively remove ozone by adsorption or decomposition due to the hydrophilic nature of the conventional zeolites in a system with a high moisture content.

Other objects and advantages of the present invention will be apparent from the following description.

In accordance with the present invention, there is provided a method for decomposing ozone, which comprises treating an ozone-containing gas with an ozone adsorbing and decomposing agent comprising a crystalline zeolite represented by the formula (I):

$$(M_{2/n}O)_x(Al_2O_3)(SiO_2)_y(H_2O)_z \qquad (I)$$

wherein M represents a cation, $n$ is an ionic valence of M, $x$ is 0 to 2, $y > 20$, and $z$ represents 0 or a positive number at a temperature of 40°C or more.

BRIEF DESCRIPTION OF THE DRAWING

The present invention will be better understood from the description set forth below with reference to the accompanying drawings, in which:

Figure 1 is a graph showing the breakthrough curve of the high silica zeolite relative to ozone in Example 1 according to the present invention;

Fig. 2 is a graph showing the relationship between the temperature of the high silica zeolite layer and the ozone concentration in the outlet gas in Example 2 according to the present invention;

Fig. 3 is a graph showing the relationship between the temperature of the high silica zeolite layer and the ozone concentration in the outlet gas in Example 4 according to the present invention;

Fig. 4 is a graph showing the relationship between the temperature of the high silica zeolite layer and the ozone concentration in the outlet gas in Example 5;

Fig. 5 is a graph showing the relationship between the temperature of the high silica zeolite layer and the ozone concentration in the outlet gas in Example 6, which is a comparative example; and,

Fig. 6 is a graph showing the relationship between a lapse of time and the ozone concentration in the outlet gas in Example 7 according to the present invention.

DESCRIPTION OF THE PREFERRED EMBODIMENTS

As mentioned above, the method for removing ozone by using a conventional zeolite is known in the art, but because the prior art method uses a zeolite molecular sieve which is a crystalline aluminosilicate as the decomposing agent, it is highly hydrophilic and problems arise when it is used in a system containing moisture, as described above. Accordingly, the present inventors made an investigation into the development of an adsorbing agent capable of effectively adsorbing and removing ozone with a high activity even in a system containing water, and consequently, found that ozone could be removed by adsorption and decomposition by using a high silica zeolite represented by the above formula (I), without a substantial lowering of activity even in a system containing moisture.

The ozone adsorbing and decomposing agent according to the present invention is represented by the above-mentioned formula (I), and such a high silica zeolite is known in the art, typically as disclosed in JP-A-54072795, or is commercially sold under the trade name of Silicalite from Union Carbide Co. However, no description is given in any prior art, including the above Publication, that can teach those skilled in the art that a high silica zeolite has extremely effective properties of ozone removal by adsorption and decomposition.

More specifically, the high silica zeolite of the above formula (I) does not exhibit remarkable ion-exchange characteristics, different from the crystalline aluminosilicate generally known as a zeolite molecular sieve, and in further contrast to the conventional zeolite molecular sieve which exhibits a strong hydrophilic property and is used for high degree drying of a fluid, the high silica zeolite exhibits a water repellent and hydropholic property.

Of the above formula (I), high silica zeolites preferable for the object of the present invention are those in which M is a hydrogen ion, ammonium ion, an alkali metal ion such as Na or K, an alkaline earth metal ion such as Ca or Mg, $x$ is 0 to 2, $y > 20$, and $z$ is 0 or a positive number, preferably 0 to 10, more preferably 2 to 4. The high silica zeolite can be synthesized by the method described in, for example, the above-mentioned JP-A-54072795. A particularly preferably high silica zeolite has a density of $1.99 \pm 0.05$ g/cm$^3$ at 25°C when synthesized as such, a density of $1.70 \pm 0.05$ g/cm$^3$ after calcination (at 600°C in air for one hour), and average refractive indices of $1.48 \pm 0.01$ and $1.39 \pm 0.01$, respectively.

Since the high silica zeolite according to the present invention can retain the adsorbed ozone without decomposition at a relatively low temperature (e.g., -10 to +20°C), it can be used as an ozone storage vessel. For example, by placing a high silica zeolite system having ozone adsorbed thereon under a reduced pressure, or by flowing a carrier gas such as oxygen or air through a gas inlet, the adsorbed ozone can be recovered. On the other hand, at a relatively higher temperature (e.g., about 28.5 to 50°C), the adsorbed ozone is decomposed and, therefore, ozone can be effectively removed from, for example, an exhaust gas containing ozone treatment facilities. Further, as mentioned above, since the activity of the high silica zeolite will not be substantially lowered by moisture, even when moisture is contained in the exhaust gas, the ozone can be effectively removed.

In using the high silica zeolite as the ozone adsorbing and decomposing agent according to the present invention, a special method is not required, and a general method can be practiced by, for example, filling the high silica zeolite into an ozone adsorbing vessel, introducing an ozone containing gas through the inlet at the lower part of the adsorbing vessel, passing the gas through the filled bed of high silica zeolite, and discharging the gas through the upper part of the vessel.

The decomposition of ozone in a gas according to the present invention can be effected by using the ozone adsorbing and decomposing agent comprising the high silica zeolite according to the present invention at a temperature of 40°C or more, preferably 45 to 70°C, in any conventional manner known in the art. For example, the ozone contained in the gas discharged from a drinking water treatment process can be fed by a blower to a decomposition vessel filled with the high silica zeolite after heating to a temperature of 40°C or more, and the ozone can be completely decomposed and discharged into the air. A specific feature according to the present invention, different from the prior art, is that the ozone containing discharged gas can be introduced as such without preliminary drying, and further, the ozone generated from electrical instruments, including, for example, electrical instruments for domestic use, can be made 0.1 ppm (V) or less.

On the other hand, while various modes may be conceived for using the high silica zeolite according to the present invention, for preservation or storage, for example, this can be accomplished by packing the high silica zeolite in a vessel made of stainless steel provided with, for example, a gas introduction pipe, a gas discharging pipe, a gas distributor, a wire mesh screen, and an rupture disc, and allowing ozone gas to be adsorbed thereon. For example, when a cylindrical stainless steel vessel having an inner volume of 3 liters is filled with 2 kg of Silicalite (high silica zeolite produced by Union Carbide) 10 × 60 mesh product, about 14 g of ozone can be stored under normal pressure at 20°C. The ozone thus stored can be recovered by, for example, passing air or oxygen through a gas discharging pipe.

EXAMPLES

The present invention will now be further described in more detail by referring to, but is by no means limited to, Examples and Comparative Examples, in which all concentrations are ppm by volume unless otherwise specified.

Example 1

Into a stainless steel (SUS-304) tube having a nominal diameter of 63.5 mm (2 1/2 inches) (2 1/2B) and a length of 300 mm was packed 500 g of high silica zeolite pellets having a representative diameter of 1.6 mm (trade name: Silicalite). Next, an ozone gas-oxygen gas mixture generated by an ozonizer produced by Chiyoda Medics was introduced into the pipe at a flow rate of 3 liter/min., to measure the ozone adsorption ability and the ozone decomposition ability of the high silica zeolite. The temperature of the adsorbent layer during the test was measured by a thermometer inserted to a depth of 46 mm from the inlet end of the above high silica zeolite packing pipe, and the ozone concentration was measured by a DASIBI MODEL DY-1500.

The results of the measurement of the ozone concentration in the adsorbent packing tube outlet gas over a lapse of time, in the case of an inlet ozone concentration of 10660 ppm (V), a temperature of the adsorbent layer of 23.2°C, and a room temperature of 14.0°C, are shown in the Table 1.

Table 1

| Time (min.) | Start | 10 | 15 | 18.75 | 19 |
|---|---|---|---|---|---|
| Ozone conc. (ppm) (V) | 0 | 0 | 0 | 1 | 101 |
| Time (min.) | 20 | 21 | 22 | 23 | 24 |
| Ozone conc. (ppm) (V) | 114 | 247 | 494 | 806 | 1191 |
| Time (min.) | 25 | 26 | 27 | 28 | 29 |
| Ozone conc. (ppm) (V) | 1531 | 1783 | 1968 | 2050 | 2084 |
| Time (min.) | 30 | | | | |
| Ozone conc. (ppm) (V) | 2066 | | | | |

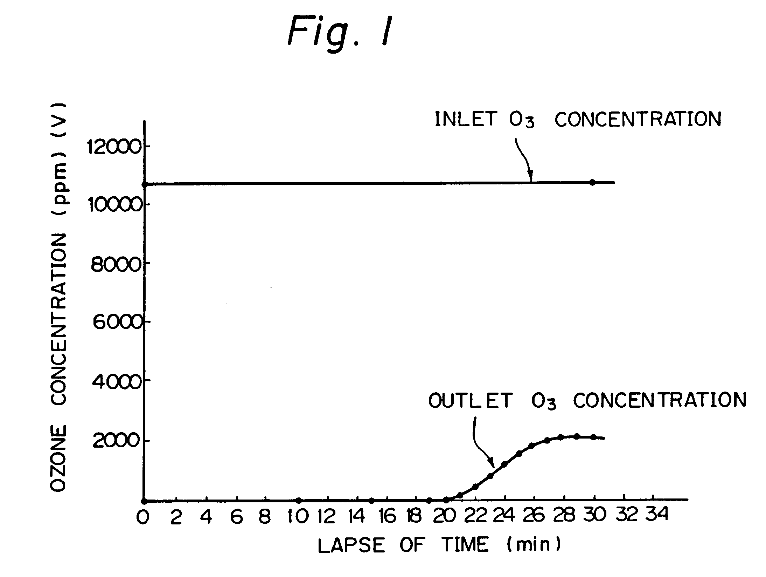

The results are plotted in the graph shown in Fig. 1, and the breakthrough volume as determined from the breakthrough curve (namely the amount of ozone adsorbed on the adsorbent before an exit ozone concentration from the bed reached at 1% of an inlet concentration) was found to be 0.269 g ozone/100 g adsorbent.

Example 2

In the experiment in Example 1, after the ozone concentration in the outlet gas relative to the ozone concentration 10660 ppm (V) in the inlet gas remained constantly at about 2050 ppm (V) (temperature = 23.2°C), a mantle heater was wound around the adsorbent packing pipe while maintaining the above state, and the temperature of the packed layer was gradually elevated due to the effectiveness of the insulation, and at the same time, the ozone concentration in the pipe outlet gas began to drop, and an approximate equilibrium was reached at an inner layer temperature of 26°C and an ozone concentration in the outlet gas of about 1310 ppm (V).

Next, when the temperature was elevated by heating with a mantle heater, with a temperature difference between the heater temperature and the layer temperature of 5°C, the ozone concentration in the outlet gas became 650 ppm (V) at 30°C, 200 ppm (V) at 35°C, and 0 ppm (V) at 40°C.

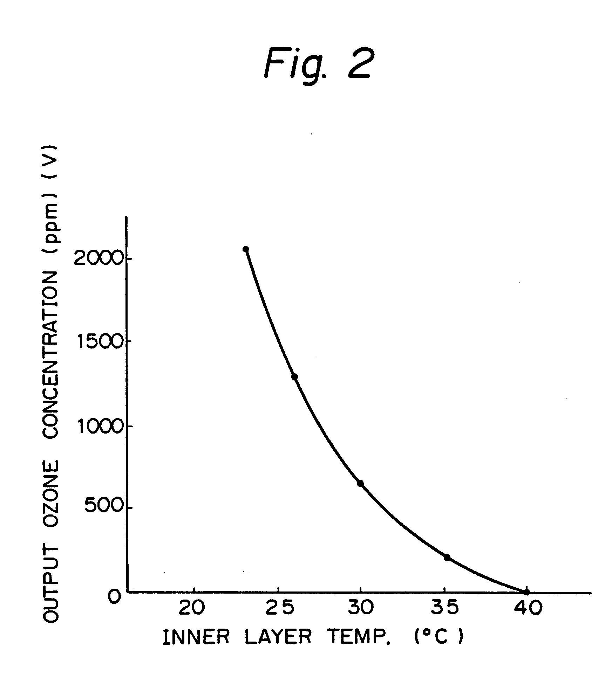

The relationship between the inner layer temperature and the outlet ozone concentration was plotted in the graph shown in Fig. 2, which clearly shows that the ozone in the gas is decomposed by the temperature elevation and discharged as oxygen.

Example 3

An aluminum pipe having an inner diameter of 18.5 mm, an outer diameter of 22 mm, and a height of 553 mm was filled with 70 ml of the above Silicalite pellets, and the test was conducted by introducing an ozone-oxygen gas mixture with an ozone gas concentration of 500 ppm (V) therein, as described in Example 1, at a flow rate of 2 liter/min.

When the temperature was elevated to 50°C and the ozone concentration was 213 ppm (V) at the pipe outlet at a pipe temperature of 25°C, the ozone concentration in the outlet gas became 0 ppm (V).

Example 4

As in Example 1, an aluminum pipe having an inner diameter of 18.5 mm, an outer diameter of 22 mm and a height of 553 mm was filled with 58 g of pellets having a representative diameter of 1.6 mm and a representative length of 1.2 mm, and ozonized air was introduced by feeding a starting air having a relative humidity of RH 43% at 17°C without drying into an ozone generator.

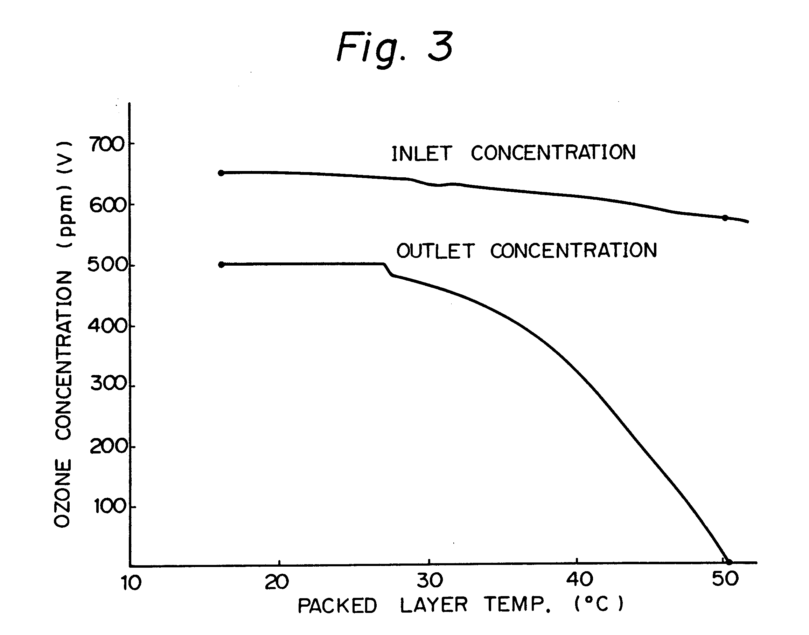

The ozone concentration at this time was from 575 ppm (V) to 650 ppm (V). The ozone concentration at the pipe outlet when the temperature of the ozonized air was 16.2°C was 500 to 510 ppm, but when the packed layer temperature was gradually elevated by heating with a mantle heater, the ozone concentration in the outlet gas became 0 ppm (V) at a layer temperature of 51.1°C. Figure 3 shows the relationship between the inner layer temperature and the ozone concentration.

Example 5

The same stainless steel pipe as used in Example 1 was packed with 325.8 g of high silica zeolite produced by Union Carbide Corp. having a representative diameter of 10 × 60 mesh (trade name: Silicalite), and then three gas humidifying bottles containing 450 g of water at 16°C were connected in series thereto, and oxygen was introduced therein through a pressure reduction valve, from an oxygen bomb, and saturated with water, followed by ozonization by an ozonizer produced by Chiyoda Medics Co. At this time, to prevent condensation of the water, the ozonizer outlet temperature was made 35°C by controlling the cooling of the ozonizer. The gas mixture containing ozone-oxygen-water generated from the ozonizer was introduced into the above Silicalite in the pipe, and while the mixture was heated by a mantle heater, the relationship between the change in the concentration of the ozone and the temperature was measured.

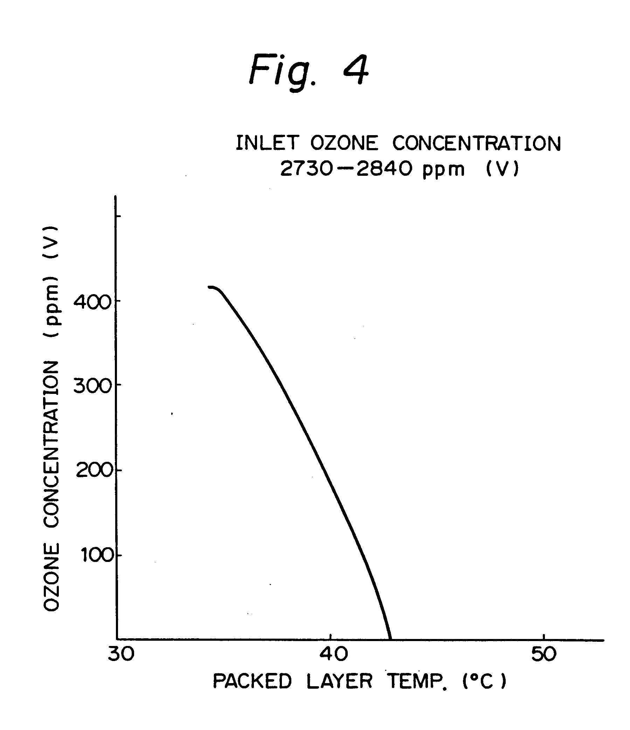

The ozone concentration in the Silicalite in the pipe at this time was from 2730 ppm (V) to 2840 ppm (V). The relationship between the filling layer temperature and the ozone concentration at the outlet is shown in Fig. 4.

Comparative Example 6

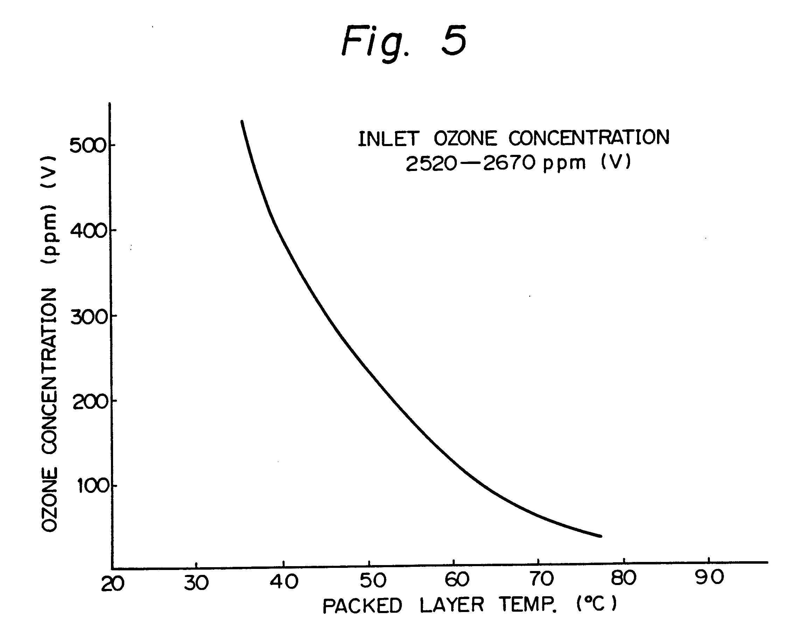

As in Example 4, an aluminum pipe having an inner diameter of 18.5 mm, an outer diameter of 22 mm, and a height of 553 mm was packed with 55.2 g of pellets having a representative diameter of 1.6 mm and a representative length of 1.1 mm of the conventional synthetic Na-form-X zeolite (product name: 13X, produced by Union Showa K.K.) to which was previously loaded 4.6 g of water per 100 g of the adsorbent. When 4 liter/min. of air dried by the general purpose PSA system under the condition of 27°C 0.392 MPa (4 kg/cm$^2$G) was passed through an ozonizer produced by Chiyoda Medics Co., the ozone concentration at the ozonizer outlet became 2520 to 2670 ppm (V). When the ozone containing air was introduced into the packed bed of the above Na-X zeolite, substantially no adsorption occurred, and the packed bed outlet ozone concentration was stabilized approximately at 520 ppm (V) at 35°C. The temperature was then elevated by a mantle heater, and the ozone concentration at the outlet was measured, whereby 50 to 60 ppm (V) of ozone was found to remain even when the temperature reached 71.5°C. Figure 5 shows the relationship between the packed layer temperature and the ozone concentration at the outlet.

Example 7

A stainless steel pipe having a nominal diameter of 63.5 mm (2 1/2 inches) (2 1/2B) and a length of 300 mm was packed with 130 g of a high silica zeolite having a representative particle size of 10 × 60 mesh produced by Union Carbide Co. (trade name: Silicalite). Next, an ozone-oxygen mixture generated by an ozonizer produced by Chiyoda Medics Co. was introduced into this pipe at a flow rate of 2 liter/min., and the ozone adsorbing ability and desorbing ability of Silicalite were measured. The temperature of the adsorbent layer during the test was measured by a thermometer inserted to a depth of 46 mm from the inlet end of the above-mentioned Silicalite packing pipe. The temperature during the measurement was 22.0 to 22.3°C. The ozone concentration was measured by a DASIBI MODEL DY-1500.

1. Conditions during Adsorption

Room temperature 15.5°C, Inlet ozone concentration 7000 ppm (V)

Table 2

| Time (min.) | Start | 1 | 5 | 6 | 6 1/2 |
|---|---|---|---|---|---|
| Ozone conc. (ppm) (V) | 0 | 0 | 0 | 5 | 300 |
| Time (min.) | 7 | 7 1/2 | 8 | 8 1/2 | 9 |
| Ozone conc. (ppm) (V) | 600 | 950 | 1300 | 1950 | 2400 |
| Time (min.) | 9 1/2 | 10 | 11 | 12 | |
| Ozone conc. (ppm) (V) | 2900 | 3320 | 3520 | 3480 | |

Since the ozone concentration was stabilized at 3480 to 3520 ppm after 12 minutes et seq, introduction of the ozone-oxygen gas mixture was discontinued and the system was sealed as was. After 24 hours, only oxygen gas was again introduced at 2 liter/min. directly into the above-mentioned packing pipe for measurement of the ozone concentration at the outlet.

2. Conditions during Desorption

Room temperature 15.3°C, Inner packed layer temperature 15.2°C

6

## Table 3

| Time (min.) | | | 0 | 1 | 2 | 3 | 4 |
|---|---|---|---|---|---|---|---|
| Ozone conc. (ppm) | (V) | | 3406 | 3355 | 3321 | 3289 | 3194 |

| Time (min.) | | | 5 | 6 | 7 | 8 | 9 |
|---|---|---|---|---|---|---|---|
| Ozone conc. (ppm) | (V) | | 3010 | 2647 | 2147 | 1590 | 1104 |

| Time (min.) | | | 10 | 11 | 12 | 13 | 14 |
|---|---|---|---|---|---|---|---|
| Ozone conc. (ppm) | (V) | | 681 | 403 | 222 | 92 | 45 |

| Time (min.) | | | 15 |
|---|---|---|---|
| Ozone conc. (ppm) | (V) | | 0 |

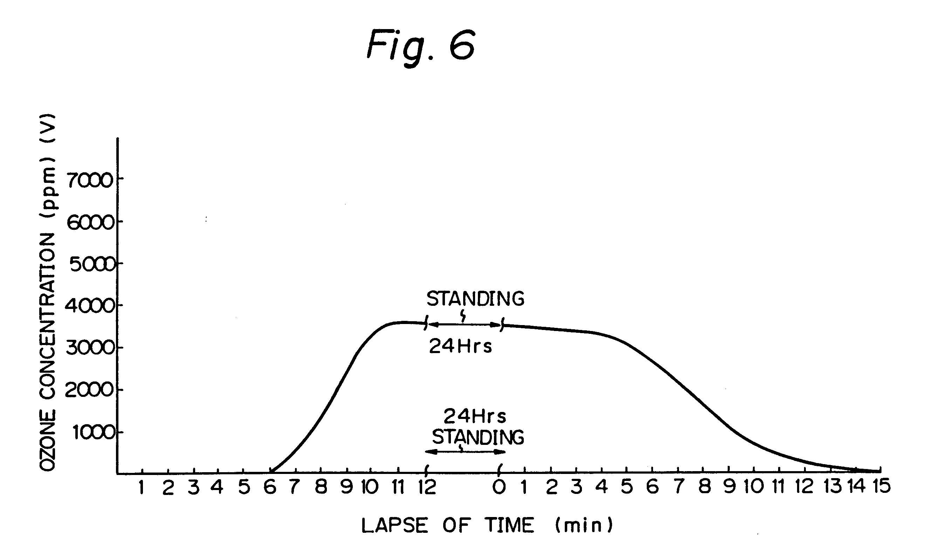

Table 2 and Table 3 are also shown in the graph in Fig. 6.

The adsorption amount of $O_3$ in this test was calculated to be 0.17 g, while the ozone amount desorbed was calculated to be 0.11 g by graphical integration.

## Claims

1. A method for decomposing ozone, which comprises treating an ozone-containing gas with an ozone adsorbing and decomposing agent comprising a crystalline zeolite represented by the formula (I):

$$(M_{2/n}O)_x(Al_2O_3)(SiO_2)_y(H_2O)_z \qquad (I)$$

wherein M represents a cation, $n$ is an ionic valence of M, $x$ is 0 to 2, $y > 20$, and $z$ represents 0 or a positive number at a temperature of 40°C or more.

2. A method as claimed in claim 1, wherein M in the formula (I) represents a hydrogen ion, ammonium ion, an alkali metal ion, or an alkaline earth metal ion.

## Patentansprüche

1. Verfahren zur Spaltung von Ozon, welches die Behandlung eines Ozon enthaltenden Gases bei einer Temperatur von 40°C oder mehr mit einem Ozon absorbierenden und spaltenden Mittel umfaßt, welches einen kristallinen Zeolith, der durch folgende Formel (I) dargestellt ist, enthält:

$$(M_{2/n}O)_x(Al_2O_3)(SiO_2)_y(H_2O)_z \qquad (I)$$

worin M ein Kation, n die ionische Wertigkeit von M, x 0 bis 2, y > 20 ist, und z 0 oder eine positive Zahl darstellt.

2. Verfahren gemäß Anspruch 1, worin M in Formel (I) ein Wasserstoffion, Ammoniumion, ein Alkalimetal-

7

lion, oder ein Erdalkalimetallion darstellt.

**Revendications**

1.  Procédé pour décomposer l'ozone consistant à traiter un gaz contenant de l'ozone avec un agent d'absorption et de décomposition de l'ozone comprenant une zéolite cristalline représentée par la formule (I) :

$$(M_{2/n}O)_x(Al_2O_3)(SiO_2)_y(H_2O)_z \qquad (I)$$

dans laquelle M représente un cation, $n$ est une valence ionique de M, $x$ vaut 0 à 2, $y > 20$, et $z$ représente 0 ou un nombre positif à une température de 40°C ou plus.

2.  Procédé selon la revendication 1, dans lequel M dans la formule (I) représente un ion hydrogène, un ion ammonium, un ion métal alcalin, ou un ion métal alcalinoterreux.

8

*Fig. 1*

# Fig. 2

Fig. 3

INLET CONCENTRATION

OUTLET CONCENTRATION

OZONE CONCENTRATION (ppm) (V)

PACKED LAYER TEMP. (°C)

# Fig. 4

INLET OZONE CONCENTRATION
2730−2840 ppm (V)

Fig. 5

Fig. 6